**Europäisches Patentamt**

**European Patent Office**

**Office européen des brevets**

(19)

(11) Veröffentlichungsnummer: **0 113 897**
A2

(12) # EUROPÄISCHE PATENTANMELDUNG

(21) Anmeldenummer: **83112692.5**

(22) Anmeldetag: **16.12.83**

(51) Int. Cl.³: **B 65 G 65/42,** B 65 D 88/28

(30) Priorität: **18.01.83 DE 3301379**

(43) Veröffentlichungstag der Anmeldung: **25.07.84**
**Patentblatt 84/30**

(84) Benannte Vertragsstaaten: **AT BE CH FR GB IT LI LU NL SE**

(71) Anmelder: **Klein, Schanzlin & Becker Aktiengesellschaft, Johann-Klein-Strasse 9, D-6710 Frankenthal (DE)**

(72) Erfinder: **Döring, Alfons, Birkenweg 11, D-6711 Grossniedesheim (DE)**
Erfinder: **Michel, Detlev, Käthe-Kollwitz-Strasse 4a, D-6710 Frankenthal (DE)**

(74) Vertreter: **Furkert, Diethelm, Klein, Schanzlin & Becker Aktiengesellschaft, PFL Postfach 225, D-6710 Frankenthal (DE)**

(54) **Entnahmevorrichtung für ein fliessfähiges, festes Medium aus einem Bunker.**

(57) Die Erfindung betrifft eine Entnahmevorrichtung für ein fließfähiges, festes Medium aus einem Bunker mit rechteckigem Querschnitt, insbesondere für die Entnahme von Formsand für Gießereien, wobei das am Boden des Bunkers austretende Medium auf eine Fördereinrichtung, vorzugsweise ein Förderband gelangt, dessen Abstand zur Austrittsöffnung des Bunkers und dessen Geschwindigkeit die Menge des pro Zeiteinheit austretenden Mediums bestimmt.

Gegenüber den vorbekannten Entnahmevorrichtungen, die nur eine Entleerung von einer Seite und damit die Möglichkeit sich bildender Restbestände erlaubten, wird mit Hilfe der Erfindung eine über die gesamte Bunkerlänge gleichmäßige Entleerung erzielt.

Eine die stagnierenden Restbestände von Medium vermeidende Entnahmevorrichtung ist gekennzeichnet durch einen am Fuß des Bunkers angeordneten Boden mit mehreren, über die Länge des Bunkers verteilten Austrittsöffnungen, deren Abstand zur Fördereinrichtung in der Weise abgestuft ist, daß die im Bezug auf die laufende Fördereinrichtung erste Austrittsöffnung den geringsten und die letzte Austrittsöffnung den größten Abstand zur Fördereinrichtung besitzt.

Entnahmevorrichtung für ein fließfähiges, festes Medium aus

einem Bunker

Die Erfindung betrifft eine Entnahmevorrichtung für ein fließfähiges, festes Medium aus einem Bunker mit rechteckigem Querschnitt, insbesondere für die Entnahme von Formsand für Gießereien, wobei das am Boden des Bunkers austretende Medium auf eine Fördereinrichtung, vorzugsweise ein Förderband gelangt, dessen Abstand zur Austrittsöffnung des Bunkers und dessen Geschwindigkeit die Menge des pro Zeiteinheit austretenden Mediums bestimmt.

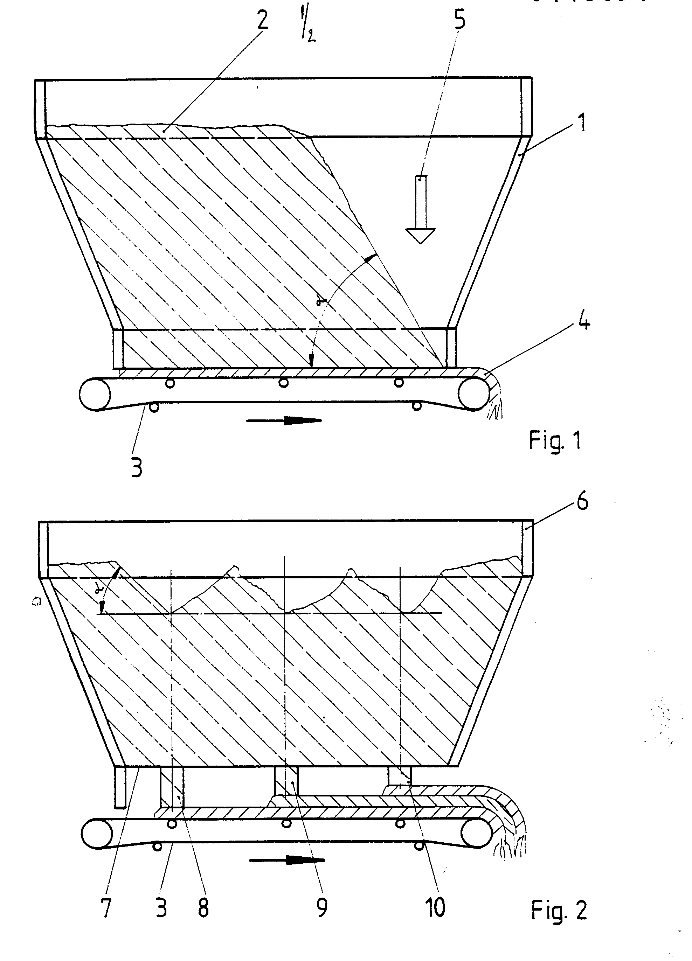

Bei den bekannten Vorrichtungen dieser Art, die Fig. 1 der Zeichnung zeigt eine solche, besitzt der Bunker keinen Boden, so daß die in Richtung des eingezeichneten Pfeiles ablaufende Austragung des gelagerten Stoffes auf der gesamten Bunkerlänge erfolgt. Die Praxis zeigt allerdings, daß die Entleerung des Bunkers unter Einhaltung eines Böschungswinkels $\alpha$ fortschreitend von der Seite her erfolgt, die oberhalb des Auslaufes des Förderbandes liegt. Die fortschreitende Entleerung des Bunkers hat zur Folge, daß der dem Auslauf gegenüberliegende Teil zuletzt entleert wird. Dies führt wiederum dazu, daß der in diesem Bunkerteil befindliche Stoff bei einer über einen längeren Zeitraum erfolgenden kontinuierlichen Befüllung, also bei Vermeidung einer vollständigen Entleerung des Bunkers, eine wesentlich größere Verweildauer besitzt als der im anderen Teil des Bunkers in kurzen Zeiträumen nachgefüllte Stoff.

Da viele der in Bunkern der angesprochenen Art zwischengelagerten Medien einem Alterungsprozeß unterliegen, kann es bei kontinuierlicher Befüllung und Entnahme dazu kommen, daß der im entlegenen Teil des Bunkers befindliche Stoff die von ihm geforderten Eigenschaften verliert. Andererseits können aber auch Zusammensetzung und Eigenschaften des nachgefüllten Stoffes verändert werden, so daß sich schließlich verschiedene Medien innerhalb eines Bunkers befinden. So kann sich die Stagnation eines Teiles des Bunkerinhaltes z. B. bei Formsand für Gießereien dann besonders nachteilig auswirken, wenn der in einem Umlaufprozeß befindliche Formsand im Laufe der Zeit seine überwachten Eigenschaften, wie Temperatur, Feuchtigkeit usw., verändert und der stagnierende Teil an diesen Änderungen nicht teilnimmt. Durch gelegentliches vollständiges Austragen des Bunkerinhaltes besteht dann die Gefahr der ungeplanten Beeinflussung der geforderten Eigenschaften.

Der Erfindung liegt die Aufgabe zugrunde, eine Entnahmevorrichtung der eingangs genannten Art zu schaffen, die eine über die gesamte Länge des Bunkers gleichmäßige Austragung des Bunkerinhaltes erbringt, also auch bei kontinuierlicher Befüllung des Bunkers die Bildung stagnierender Restbestände verhindert.

. . .

Diese Aufgabe wird erfindungsgemäß gelöst durch einen am Fuß des Bunkers angeordneten Boden mit mehreren, über die Länge des Bunkers verteilten Austrittsöffnungen, deren Abstand zur Fördereinrichtung in der Weise abgestuft ist, daß die im Bezug auf die laufende Fördereinrichtung erste Austrittsöffnung den geringsten und die letzte Austrittsöffnung den größten Abstand zur Fördereinrichtung besitzt.

Die Ansprüche 2 und 3 geben Bemessungsregeln für die Abstände der Austrittsöffnungen untereinander und zur Fördereinrichtung, die sich besonders günstig auf eine gleichmäßige Austragung des Bunkerinhaltes auswirken. Durch die im Anspruch 4 vorgeschlagene Maßnahme wird schließlich noch eine im Ausführungsbeispiel näher erläuterte weitere Verbesserung einer gleichmäßigen Entleerung erzielt.

Die der Erläuterung der Erfindung dienende Zeichnung zeigt in

Fig. 1 eine Entnahmevorrichtung der vorbekannten Art in schematischer Darstellung, in

Fig. 2 eine Entnahmevorrichtung der erfindungsgemäßen Art, in

Fig. 3 die Entnahmevorrichtung der Fig. 2 mit Bemessungsangaben, und in

Fig. 4 eine dem Anspruch 4 entsprechend ausgestaltete Entnahmevorrichtung.

Im Bunker 1 der Fig. 1 befindet sich Formsand 2, der über die am Fuß des Bunkers 1 vorhandene Öffnung auf ein Förderband 3 austritt. Die Förderrichtung wird durch den unterhalb des Förderbandes 3 befindlichen Pfeil angezeigt. Die Entleerung des Bunkers 1 erfolgt immer nur von der Seite des auslaufenden Förderbandes 3 her, dabei stellt sich ein Böschungswinkel $\alpha$ auf der Ablaufseite ein. Der Teil des Formsandes 2, der sich auf der dem Ablauf 4 gegenüberliegenden Seite befindet, wird zuletzt entleert. Bei einer unvollständigen Entleerung, wie sie vor allem bei einer kontinuierlichen Befüllung und Entnahme gegeben ist, verbleibt daher ein stagnierender Rest, der erst bei einer zufälligen oder ungewollten vollständigen Entleerung des Bunkers 1 ausgetragen wird. Eine kontinuierliche Befüllung des Bunkers 1 kann nur im freien Bereich, also an der Stelle des eingezeichneten Pfeiles 5 erfolgen.

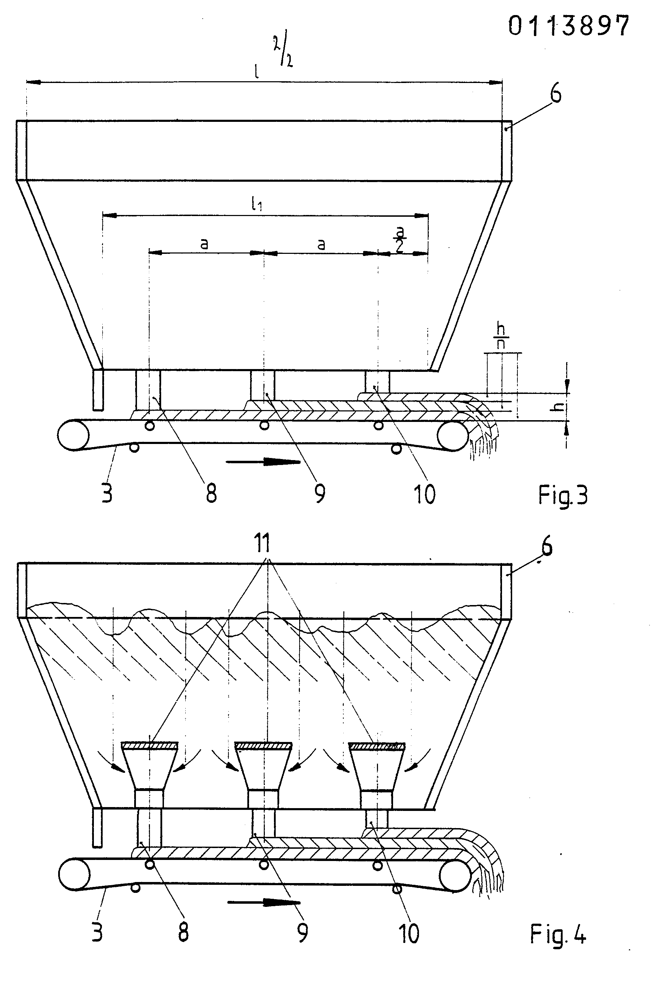

Der Bunker 6 der erfindungsgemäßen Entnahmevorrichtung der Fig. 2 besitzt einen Boden 7, in dem drei Austrittsöffnungen 8, 9 und 10 angeordnet sind. Zur Verdeutlichung sind in der Fig. 3 die Abstände und Höhen der Austrittsöffnungen 8, 9 und 10 mit Bemessungsangaben versehen. Der Buchstabe l bezeichnet die Länge des Bunkers 6 im oberen Bereich, gemessen an den

...

Innenwänden, während $l_1$ die Länge des Fußbereiches angibt.
Mit a wird der Abstand zwischen den Mittelachsen der Austrittsöffnungen 8, 9 und 10 gekennzeichnet; h gibt den Höhenabstand der
letzten Austrittsöffnung 10 zum Förderband 3 an.

Der Abstand a ist der Quotient aus der Länge $l_1$ und der Anzahl
n der Öffnungen. Der Abstand der ersten Austrittsöffnung 8 und
der letzten Austrittsöffnung 10 zur Wand des Bunkers 6 beträgt
a/2. Während die lichte Höhe der letzten Austrittsöffnung 10 zum
Förderband 3 den Wert h hat, ergibt sich für die erste Austrittsöffnung 8 die Höhe von h/3 und für die zweite die Höhe von 2h/3.
Jede Austrittsöffnung hat somit zur nächsten stets die gleiche lichte
Höhe von h/n.

Der Abstand der Austrittsöffnungen 8, 9 und 10 und deren zum
Auslauf hin ansteigende Höhe bewirken, daß das auszutragende
Medium fortschreitend lagenweise aufeinandergepackt wird. Es
ergibt sich eine gleichmäßige Entleerung über die gesamte Bunkerlänge, d. h. das Bunkervolumen steht vollständig zur Verfügung.
Entsprechend der Anzahl n der Austrittsöffnungen bilden sich am
Einlauf des Bunkers 6, wie die Fig. 2 veranschaulicht, im
Medium n Abzugskegel.

Durch die Anbringung trapezförmiger Dachhauben 11 oberhalb der Austrittsöffnungen 8, 9 und 10 verdoppelt sich noch einmal die Anzahl der sich bildenden Abzugskegel. Die allein einen seitlichen Eintritt des Mediums in die Austrittsöffnungen 8, 9 und 10 erlaubenden Dachhauben 11 bewirken im übrigen eine Entlastung der Austrittsöffnungen 8, 9 und 10 vom Druck des oberhalb der Öffnungen befindlichen Mediums. Aufgrund dieses Druckes entstehende Rückstauungen des Mediums auf dem Förderband 3 werden somit sicher vermieden.

Klein, Schanzlin & Becker Aktiengesellschaft

Patentansprüche

1. Entnahmevorrichtung für ein fließfähiges, festes Medium aus einem Bunker mit rechteckigem Querschnitt, insbesondere für die Entnahme von Formsand für Gießereien, wobei das am Boden des Bunkers austretende Medium auf eine Fördereinrichtung, vorzugsweise ein Förderband gelangt, dessen Abstand zur Austrittsöffnung des Bunkers und dessen Geschwindigkeit die Menge des pro Zeiteinheit austretenden Mediums bestimmt, gekennzeichnet durch einen am Fuß des Bunkers (6) angeordneten Boden (7) mit mehreren, über die Länge des Bunkers (6) verteilten Austrittsöffnungen (8,9,10), deren Abstand zur Fördereinrichtung (3) in der Weise abgestuft ist, daß die im Bezug auf die laufende Fördereinrichtung (3) erste Austrittsöffnung (8) den geringsten und die letzte Austrittsöffnung (10) den größten Abstand zur Fördereinrichtung (3) besitzt.

2. Entnahmevorrichtung nach Anspruch 1, dadurch gekennzeichnet, daß der Abstand (a) zwischen den einzelnen Austrittsöffnungen (8,9,10) dem Quotienten des in Längsrichtung vorhandenen

...2

Abstandes ($l_1$) zwischen den Innenwänden des Bunkers (6) und der Anzahl (n) der Austrittsöffnungen (8,9,10) entspricht, wobei der jeweilige Abstand zwischen der Innenwand des Bunkers (6) und der ersten bzw. letzten Austrittsöffnung (8,10) die Hälfte des zwischen den einzelnen Austrittsöffnungen (8,9,10) vorhandenen Abstandes (a) ausmacht.

3. Entnahmevorrichtung nach Anspruch 1, dadurch gekennzeichnet, daß der Abstand der ersten Austrittsöffnung (8) von der Fördereinrichtung (3) dem Quotienten aus dem Abstand (h) der letzten Austrittsöffnung (10) von der Fördereinrichtung (3) und der Anzahl (n) der Austrittsöffnungen (8,9,10) entspricht, während der Abstand der folgenden Austrittsöffnungen (9,10) dem Produkt des Abstandes der ersten und der sich aus der Reihenfolge ergebenden Zahl der jeweiligen Austrittsöffnung entspricht.

4. Entnahmevorrichtung nach Anspruch 1 und einem oder mehreren der folgenden Ansprüche, dadurch gekennzeichnet, daß über den Austrittsöffnungen (8,9,10) trapezförmige Dachhauben (11) vorgesehen sind, die allein einen seitlichen Eintritt des im Bunker (6) befindlichen Mediums in die Austrittsöffnungen (8,9,10) erlauben.

Fig. 1

Fig. 2

Fig.3

Fig.4